(19) Europäisches Patentamt
European Patent Office
Office européen des brevets

(11) EP 4 755 961 A1

(12) **EUROPEAN PATENT APPLICATION**
published in accordance with Art. 153(4) EPC

(43) Date of publication:
**10.06.2026 Bulletin 2026/24**

(21) Application number: **24851750.0**

(22) Date of filing: **01.08.2024**

(51) International Patent Classification (IPC):
***C08J 11/10*** *(2006.01)*

(52) Cooperative Patent Classification (CPC):
**C08J 11/10**

(86) International application number:
**PCT/JP2024/027585**

(87) International publication number:
**WO 2025/033325 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 JP 2023128061**

(71) Applicants:
- **BRIDGESTONE CORPORATION**
  **Chuo-ku**
  **Tokyo 104-8340 (JP)**
- **National Institute of Advanced Industrial Science and Technology**
  **Chiyoda-ku**
  **Tokyo 100-8921 (JP)**
- **Tohoku University**
  **Sendai-shi, Miyagi 980-8577 (JP)**

(72) Inventors:
- **HOJO Masahiro**
  **Tokyo 104-8340 (JP)**
- **HOMMA Masahiro**
  **Tokyo 104-8340 (JP)**
- **TAHARA Seiichi**
  **Tokyo 104-8340 (JP)**
- **FUKAYA Norihisa**
  **Tsukuba-shi, Ibaraki 305-8561 (JP)**
- **WAHYU Satpriyo Putro**
  **Tsukuba-shi, Ibaraki 305-8561 (JP)**
- **UEDA Yoshihiro**
  **Tsukuba-shi, Ibaraki 305-8561 (JP)**
- **CHOI Jun-Chul**
  **Tsukuba-shi, Ibaraki 305-8561 (JP)**
- **YAMASHITA Hiroshi**
  **Tsukuba-shi, Ibaraki 305-8561 (JP)**
- **HATORI Makiko**
  **Tsukuba-shi, Ibaraki 305-8561 (JP)**
- **SUGIKI Makoto**
  **Tsukuba-shi, Ibaraki 305-8561 (JP)**
- **TANAKA Hisanori**
  **Tsukuba-shi, Ibaraki 305-8561 (JP)**
- **KAMEI Naoki**
  **Tsukuba-shi, Ibaraki 305-8561 (JP)**
- **YOSHIOKA Toshiaki**
  **Sendai-shi, Miyagi 980-8577 (JP)**
- **KUMAGAI Shogo**
  **Sendai-shi, Miyagi 980-8577 (JP)**

(74) Representative: **Marks & Clerk LLP**
**15 Fetter Lane**
**London EC4A 1BW (GB)**

(54) **METHOD FOR DECOMPOSING CROSSLINKED RUBBER**

(57) With the aim of providing a method for decomposing crosslinked rubber capable of improving the yield of C4-C10 chemicals, a method for decomposing crosslinked rubber includes: a first decomposition step of decomposing crosslinked rubber containing diene rubber using a catalyst represented by any one of the following formulae (1) to (3) (in the formulae, M is ruthenium, molybdenum, etc.; $X^1$, $X^2$, $L^1$, $L^2$, and $L^3$ each independently represent a ligand; $R^1$, $R^2$, and $R^3$ each independently represent hydrogen, an alkyl group, an alkenyl group, an aryl group, etc. (these groups may be substituted with an alkyl group, halogen, etc.); $L^1$ and $L^2$, $R^1$ and $R^2$, as well as $L^1$ and $R^1$ may be bonded to each other to form a ring); and a second decomposition step of heating a decomposition product obtained in the first decomposition step under an inert gas atmosphere and in the absence of a catalyst, at a heating rate of 800°C/min or more from 100°C to 450°C, and performing thermal decomposition at 450°C to 950°C.

EP 4 755 961 A1

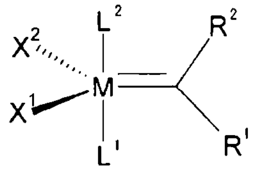

$\cdots$ (1)

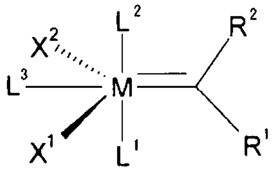

$\cdots$ (2)

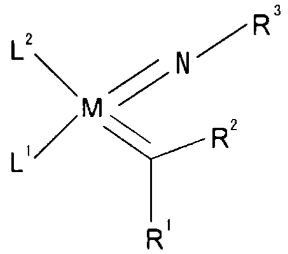

$\cdots$ (3)

## Description

TECHNICAL FIELD

The present disclosure relates to a method for decomposing crosslinked rubber.

BACKGROUND

Conventionally, rubber products using crosslinked rubber such as vulcanized rubber as the main material are difficult to reuse, and after the end of their product life, they are often reused as fuel, particularly in cement plants and the like. However, in recent years, with the growing awareness of environmental issues, there is a demand for the development of methods for reusing materials obtained by decomposing rubber products, rather than burning rubber products as fuel.

There are various methods for decomposing crosslinked rubber, and for example, techniques for thermally decomposing crosslinked rubber at high temperatures are known. In addition, PTL 1 below discloses a method for decomposing polyisoprene-based rubber using microorganisms.

CITATION LIST

Patent Literature

PTL 1: JP 2009-247241 A

SUMMARY

(Technical Problem)

As described above, there are various methods for decomposing crosslinked rubber, but from the viewpoint of further improving the recyclability of crosslinked rubber, it is important to increase the yield of chemicals, particularly diene-based monomers, obtained by decomposition.

However, as described above, when crosslinked rubber is thermally decomposed at high temperatures, the decomposition products become gaseous or polycyclic aromatic, resulting in a decrease in the yield of C4-C10 chemicals, particularly diene-based monomers. In addition, as in the technique disclosed in PTL 1 above, when decomposing crosslinked rubber using microorganisms, there is a problem in that the decomposition takes a long time, and furthermore, the yield of C4-C10 chemicals, particularly diene-based monomers, is low.

Therefore, the present disclosure addresses the above problems of the prior art, and an object thereof is to provide a method for decomposing crosslinked rubber capable of improving the yield of C4-C10 chemicals, particularly diene-based monomers.

(Solution to Problem)

The gist configuration of the method for decomposing crosslinked rubber of the present disclosure for solving the above problems is as follows.

[1] A method for decomposing crosslinked rubber, comprising:

a first decomposition step of decomposing crosslinked rubber containing diene rubber using a catalyst represented by general formula (1), (2), or (3), shown below:

[Chem. 1]

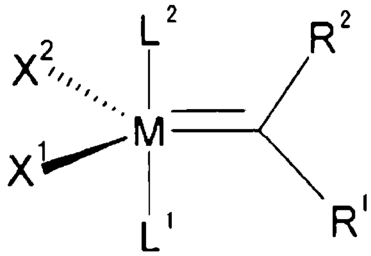

··· (1)

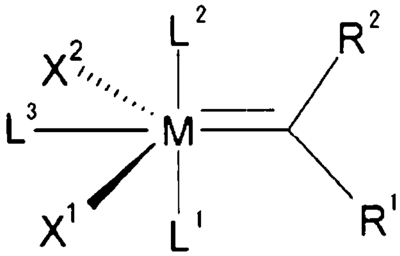

··· (2)

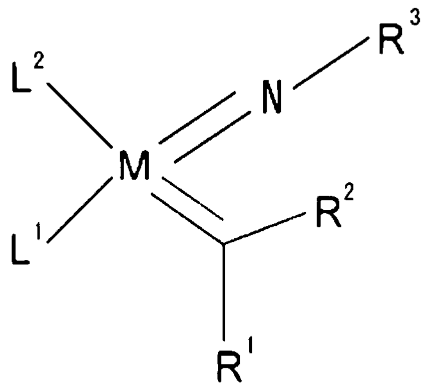

··· (3)

where, in general formulae (1), (2), and (3), M is ruthenium, titanium, molybdenum, or tungsten,
$X^1$ and $X^2$ each independently represent a ligand,
$L^1$, $L^2$, and $L^3$ each independently represent a ligand,
$R^1$, $R^2$, and $R^3$ each independently represent hydrogen, an alkyl group, a cycloalkyl group, an alkenyl group, an alkynyl group, an aryl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, where these groups may be substituted with one or more alkyl groups, halogens, alkoxy groups, aryl groups, or heteroaryl groups,
$L^1$ and $L^2$ may be bonded to each other to form a ring,
$R^1$ and $R^2$ may be bonded to each other to form a ring, and
$L^1$ and $R^1$ may be bonded to each other to form a ring; and
a second decomposition step of heating a decomposition product obtained in the first decomposition step under

an inert gas atmosphere and in the absence of a catalyst, at a heating rate of 800°C/min or more from 100°C to 450°C, and performing thermal decomposition at 450°C to 950°C.

[2] A method for decomposing crosslinked rubber, comprising:

a first decomposition step of decomposing crosslinked rubber containing diene rubber using a catalyst represented by the above general formula (1), (2), or (3); and
a second decomposition step of heating a decomposition product obtained in the first decomposition step under an inert gas atmosphere and in the absence of a catalyst, at a heating rate of 800°C/min or more from 100°C to 600°C, and performing thermal decomposition at 600°C to 950°C.

[3] A method for decomposing crosslinked rubber, comprising:

a first decomposition step of decomposing crosslinked rubber containing diene rubber using a catalyst represented by the above general formula (1), (2), or (3); and
a second decomposition step of heating a decomposition product obtained in the first decomposition step under an inert gas atmosphere and in the absence of a catalyst, at a heating rate of 2000°C/min or more from 100°C to 450°C, and performing thermal decomposition at 450°C to 950°C.

[4] A method for decomposing crosslinked rubber, comprising:

a first decomposition step of decomposing crosslinked rubber containing diene rubber using a catalyst represented by the above general formula (1), (2), or (3); and
a second decomposition step of heating a decomposition product obtained in the first decomposition step under an inert gas atmosphere and in the absence of a catalyst, at a heating rate of 2000°C/min or more from 100°C to 600°C, and performing thermal decomposition at 600°C to 950°C.

[5] The method for decomposing crosslinked rubber according to any one of [1] to [4], wherein the thermal decomposition in the second decomposition step is performed at 650°C to 850°C.
[6] The method for decomposing crosslinked rubber according to any one of [1] to [5], wherein, through the first decomposition step, 80 mass% or more of the diene rubber in the crosslinked rubber is decomposed into a diene oligomer having a weight-average molecular weight of 100 to 50,000.
[7] The method for decomposing crosslinked rubber according to [6], wherein, through the second decomposition step, 30 mass% or more of the diene oligomer is decomposed into C4-C10 chemicals.
[8] The method for decomposing crosslinked rubber according to any one of [1] to [7], wherein, through the first decomposition step and the second decomposition step, 20 mass% or more of the diene rubber in the crosslinked rubber is decomposed into C4-C10 chemicals.
[9] The method for decomposing crosslinked rubber according to any one of [1] to [8], wherein the first decomposition step is performed at not lower than 20°C and not higher than 200°C.
[10] The method for decomposing crosslinked rubber according to any one of [1] to [9], wherein the diene rubber includes at least one selected from the group consisting of isoprene skeleton rubber, styrene-butadiene rubber, and butadiene rubber.
[11] The method for decomposing crosslinked rubber according to any one of [1] to [10], wherein the crosslinked rubber further contains carbon black.
[12] The method for decomposing crosslinked rubber according to any one of [1] to [11], wherein the crosslinked rubber further contains sulfur.

(Advantageous Effect)

According to the present disclosure, it is possible to provide a method for decomposing crosslinked rubber capable of improving the yield of C4-C10 chemicals, particularly diene-based monomers.

DETAILED DESCRIPTION

Hereinafter, the method for decomposing crosslinked rubber according to the present disclosure will be illustrated and described in detail based on its embodiments.

[Definitions]

The compounds described in this specification may be partially or entirely derived from fossil resources, derived from biological resources such as plant resources, or derived from recycled resources such as used tires. Furthermore, they may be derived from a mixture of any two or more of fossil resources, biological resources, and recycled resources.

[Method for Decomposing Crosslinked Rubber]

The method for decomposing crosslinked rubber according to the present disclosure comprises:

a first decomposition step of decomposing crosslinked rubber containing diene rubber using a catalyst represented by the following general formula (1), (2), or (3):

[Chem. 2]

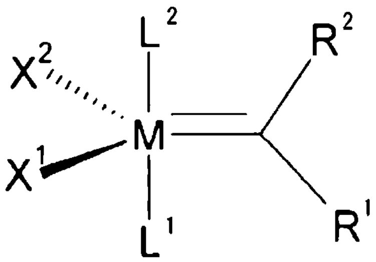

··· (1)

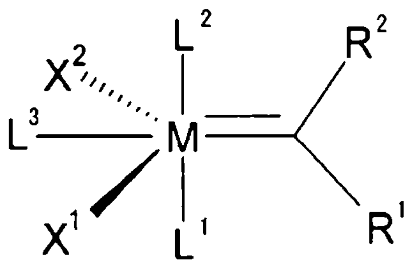

··· (2)

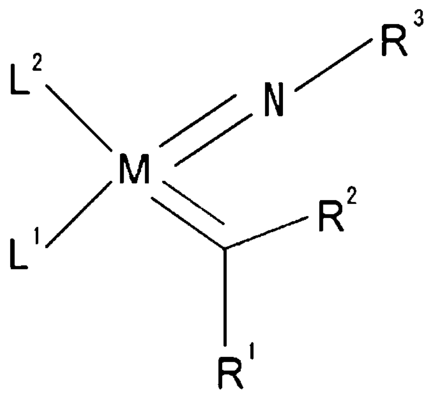

··· (3)

[In the formula, M is ruthenium, titanium, molybdenum, or tungsten,
$X^1$ and $X^2$ each independently represent a ligand,
$L^1$, $L^2$, and $L^3$ each independently represent a ligand,
$R^1$, $R^2$, and $R^3$ each independently represent hydrogen, an alkyl group, a cycloalkyl group, an alkenyl group, an alkynyl group, an aryl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group (where these groups may be substituted with one or more alkyl groups, halogens, alkoxy groups, aryl groups, or heteroaryl groups),
$L^1$ and $L^2$ may be bonded to each other to form a ring,
$R^1$ and $R^2$ may be bonded to each other to form a ring, and
$L^1$ and $R^1$ may be bonded to each other to form a ring]; and
a second decomposition step of heating the decomposition product obtained in the first decomposition step under an

inert gas atmosphere and in the absence of a catalyst, at a heating rate of 800°C/min or more from 100°C to 450°C, and performing thermal decomposition at 450-950°C.

In a preferred embodiment, the method comprises: a first decomposition step of decomposing crosslinked rubber containing diene rubber using a catalyst represented by the above general formula (1), (2), or (3); and a second decomposition step of heating the decomposition product obtained in the first decomposition step under an inert gas atmosphere and in the absence of a catalyst, at a heating rate of 800°C/min or more from 100°C to 600°C, and performing thermal decomposition at 600-950°C.

In another preferred embodiment, the method comprises: a first decomposition step of decomposing crosslinked rubber containing diene rubber using a catalyst represented by the above general formula (1), (2), or (3); and a second decomposition step of heating the decomposition product obtained in the first decomposition step under an inert gas atmosphere and in the absence of a catalyst, at a heating rate of 2000°C/min or more from 100°C to 450°C, and performing thermal decomposition at 450-950°C.

In yet another preferred embodiment, the method comprises: a first decomposition step of decomposing crosslinked rubber containing diene rubber using a catalyst represented by the above general formula (1), (2), or (3); and a second decomposition step of heating the decomposition product obtained in the first decomposition step under an inert gas atmosphere and in the absence of a catalyst, at a heating rate of 2000°C/min or more from 100°C to 600°C, and performing thermal decomposition at 600-950°C.

The catalyst represented by the above general formula (1), (2), or (3) used in the first decomposition step of the method for decomposing crosslinked rubber according to the present disclosure can promote metathesis decomposition, and metathesis decomposition occurs at the unsaturated bonds in the diene rubber, thereby decomposing the diene rubber. Here, metathesis decomposition, unlike ordinary thermal decomposition, does not require high temperatures, so the diene rubber can be decomposed under mild conditions. In addition, metathesis decomposition can suppress the formation of polycyclic aromatic compounds in the decomposition products, and compared to ordinary thermal decomposition, can improve the retention rate of the monomer skeletons (such as isoprene skeletons, butadiene skeletons, etc.) in the diene rubber.

Furthermore, in the method for decomposing crosslinked rubber according to the present disclosure, in the second decomposition step, the decomposition product obtained in the first decomposition step is rapidly heated under an inert gas atmosphere and in the absence of a catalyst, at a heating rate of 800°C/min or more from 100°C to 450°C, and thermally decomposed at 450-950°C, thereby reducing the proportion decomposed during heating (i.e., at temperatures lower than the target decomposition temperature), suppressing the generation and volatilization of decomposition products with higher molecular weight than C4-C10 chemicals from the decomposition product obtained in the first decomposition step, and further, while suppressing hydrogenation of the double bonds in the monomer skeletons (such as isoprene skeletons, butadiene skeletons, etc.) of the diene rubber and oxidation of the decomposition products, the decomposition products (intermediate decomposition products) can be decomposed into C4-C10 chemicals (particularly, diene monomers) with high yield.

Accordingly, according to the method for decomposing crosslinked rubber of the present disclosure, it is possible to improve the yield of C4-C10 chemicals, particularly diene monomers, ultimately obtained from the crosslinked rubber.

<First Decomposition Step>

The method for decomposing crosslinked rubber according to the present embodiment includes a first decomposition step of decomposing crosslinked rubber containing diene rubber using a catalyst represented by the above general formula (1), (2), or (3).

(Crosslinked Rubber)

The crosslinked rubber to be decomposed in the method of the present embodiment contains diene rubber, and may further contain carbon black, sulfur, and the like.

The crosslinked rubber used for decomposition may be grouped in advance according to the type of diene rubber blended, and thermal decomposition may be performed for each group. Alternatively, grouping may be performed in advance according to the type of filler blended (for example, type of carbon black, type of silica, mixing ratio of carbon black and silica, etc.), and thermal decomposition may be performed for each group. Furthermore, both grouping by type of diene rubber and grouping by type of filler may be performed, and thermal decomposition may be performed for each group. When thermal decomposition is performed for each group in this way, recovered carbon black, recovered silica, etc., having more uniform physical properties can be obtained, and when blended again into a rubber composition, a rubber composition with better performance can be obtained.

In addition, when the crosslinked rubber used for decomposition is derived from tires, grouping may be performed

in advance according to the type of tire (for example, for passenger vehicles, for trucks and buses, for large vehicles such as off-road vehicles, for aircraft, for agricultural vehicles, etc.), and thermal decomposition may be performed for each group. Alternatively, grouping may be performed in advance according to the tire component (for example, tread rubber, sidewall rubber, bead portion rubber, steel cord coating rubber, organic fiber coating rubber, pad rubber, cushion rubber, etc.), and thermal decomposition may be performed for each group. Furthermore, both grouping by tire type and grouping by tire component may be performed, and thermal decomposition may be performed for each group. When thermal decomposition is performed for each group in this way, recovered carbon black, etc., having more uniform physical properties can be obtained, and when blended again into a rubber composition, a rubber composition with better performance can be obtained.

The form of the crosslinked rubber is not particularly limited, and may be, for example, powdered rubber or the like. Such powdered rubber can be obtained by cutting and pulverizing used rubber products such as waste tires. The pulverization process may include multiple steps such as a preliminary pulverization step and a fine pulverization step, and after the pulverization process, a classification step may be performed to adjust the particle size of the powdered rubber to be used.

The crosslinked rubber may be waste rubber subjected to recycling, used rubber products, or the like. Waste rubber is not limited to that generated from rubber products, but refers to all discarded rubber including unnecessary scraps generated during the production or repair of rubber products. Examples of scraps include, for example, buffing powder, peeling rubber, and the like. Buffing powder is, for example, fine rubber generated in the buffing process of retreading tires, in which the tread portion remaining on the base tire is shaved off. Peeling rubber is, for example, long rubber with a width of about 1-2 cm peeled from the surface of rubber products such as tires. Peeling rubber is generated by shaving the surface of rubber products such as tires using a knife with a U-shaped or V-shaped tip as a peeler. Rubber products include, for example, final products such as tires, rubber hoses, rubber conveyor belts, and rubber parts or components at the manufacturing stage of final products. Used tires may be those subjected to retreading, or may be waste tires generated by tire replacement, vehicle scrapping, or the like, and ELT (End-of-Life Tire) that has reached the end of its life as a tire, or any other reason for disposal.

--Diene Rubber--

The diene rubber is rubber containing units (diene units) derived from diene monomers, and may further contain units derived from copolymerizable comonomers.

The units derived from diene monomers enable crosslinking (vulcanization) of the diene rubber and impart elongation and strength characteristic of rubber. In the crosslinked rubber, the diene rubber is usually present in a crosslinked state, but a part may be uncrosslinked. Specific examples of diene monomers (diene compounds) include 1,3-butadiene, isoprene, 1,3-pentadiene, 2,3-dimethyl-1,3-butadiene, and the like.

On the other hand, examples of copolymerizable comonomers include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Examples of the diene rubber include isoprene skeleton rubber, styrene-butadiene rubber (SBR), butadiene rubber (BR), chloroprene rubber (CR), and the like. Here, isoprene skeleton rubber is rubber having isoprene units as the main skeleton, and specific examples include natural rubber (NR), synthetic isoprene rubber (IR), and the like. Among these, it is preferable that the diene rubber contains at least one selected from the group consisting of isoprene skeleton rubber, styrene-butadiene rubber, and butadiene rubber. When the diene rubber contains at least one selected from the group consisting of isoprene skeleton rubber, styrene-butadiene rubber, and butadiene rubber, diene monomers such as isoprene and butadiene, which are easy to reuse, can be obtained.

The content of the diene rubber in the crosslinked rubber is not particularly limited, and is preferably in the range of, for example, 10 to 100 mass%, and more preferably in the range of 30 to 100 mass% from the viewpoint of further improving the yield of butadiene and isoprene.

--Carbon Black--

The crosslinked rubber may further contain carbon black. In the first decomposition step of the method for decomposing crosslinked rubber according to the present disclosure, by performing metathesis decomposition using a catalyst represented by the above general formula (1), (2), or (3), the diene rubber can be decomposed and reduced to a lower molecular weight, for example, to a liquid polymer or liquid oligomer. Therefore, even if the crosslinked rubber contains carbon black, after the first decomposition step, carbon black can be easily separated and recovered, for example, by solid-liquid separation. By recovering carbon black before the thermal decomposition in the second decomposition step, it can be reused as high-quality carbon black. Furthermore, even if the crosslinked rubber contains carbon black, the crosslinked rubber can be efficiently decomposed.

The content of carbon black in the crosslinked rubber is not particularly limited, and is, for example, in the range of 10 to 150 parts by mass per 100 parts by mass of the diene rubber, and preferably in the range of 30 to 120 parts by mass.

--Sulfur--

The crosslinked rubber may further contain sulfur. In the crosslinked rubber, sulfur is usually present in a state of crosslinking the diene rubber (as a bridge of the diene rubber), but a part may be free. In the first decomposition step of the method for decomposing crosslinked rubber according to the present disclosure, by performing metathesis decomposition using a catalyst represented by the above general formula (1), (2), or (3), the diene rubber can be decomposed and reduced to a lower molecular weight, for example, to a liquid polymer or liquid oligomer. Therefore, even if the crosslinked rubber contains sulfur, after the first decomposition step, sulfur can be easily recovered, for example, by solid-liquid separation. By recovering sulfur before the thermal decomposition in the second decomposition step, sulfur can be reused. Furthermore, even if the crosslinked rubber contains sulfur, the crosslinked rubber can be efficiently decomposed.

The content of sulfur in the crosslinked rubber is not particularly limited, and is, for example, in the range of 0.1 to 10 parts by mass per 100 parts by mass of the diene rubber, and preferably in the range of 1 to 5 parts by mass.

--Other Components--

The crosslinked rubber may further contain, in addition to the above diene rubber, carbon black, and sulfur, various components commonly used in the rubber industry, for example, rubber components other than diene rubber, fillers other than carbon black (such as silica, calcium carbonate, etc.), silane coupling agents, antioxidants, softeners, processing aids, resins, surfactants, organic acids (such as stearic acid), zinc oxide (zinc white), vulcanization accelerators, crosslinking agents other than sulfur (such as peroxides), and the like.

(Catalyst)

In the first decomposition step of the method for decomposing crosslinked rubber according to the present embodiment, the above crosslinked rubber is decomposed using a catalyst represented by the following general formula (1), (2), or (3):

[Chem. 3]

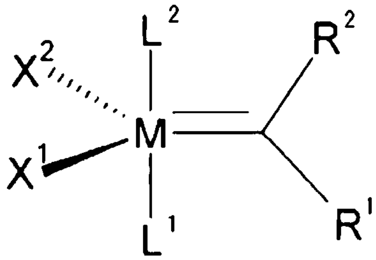

··· (1)

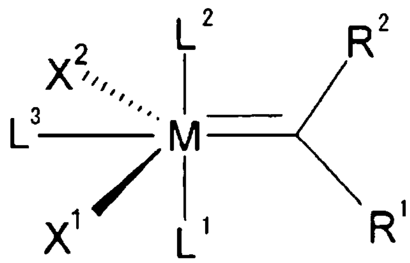

··· (2)

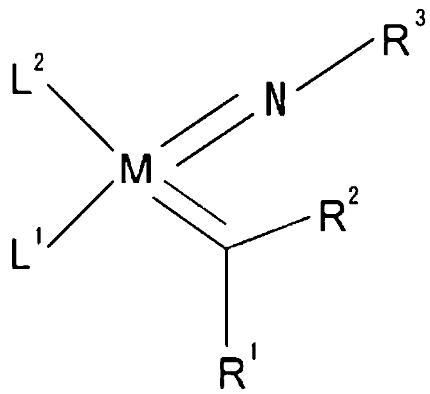

··· (3)

The catalyst of general formula (1), (2), or (3) can promote metathesis decomposition and can decompose diene rubber simply (under mild conditions) and rapidly.

In the above general formulae (1), (2), and (3), M is ruthenium (Ru), titanium (Ti), molybdenum (Mo), or tungsten (W). Among these, from the viewpoint of promoting the decomposition reaction of diene rubber in crosslinked rubber, ruthenium is preferred as M.

In the above general formulae (1) and (2), $X^1$ and $X^2$ each independently represent a ligand, and are preferably anionic ligands. Examples of $X^1$ and $X^2$ include hydrogen, halogen, pseudohalogen, a linear or branched alkyl group having 1 to 30 carbon atoms, an aryl group having 6 to 24 carbon atoms, an alkoxy group having 1 to 20 carbon atoms, an aryloxy group having 6 to 24 carbon atoms, an alkyl diketone having 3 to 20 carbon atoms, an aryl diketone having 6 to 24 carbon atoms, a carboxylate having 1 to 20 carbon atoms, an alkyl sulfonate having 1 to 20 carbon atoms, an aryl sulfonate having 6 to 24 carbon atoms, an alkyl thiol group having 1 to 20 carbon atoms, an aryl thiol group having 6 to 24 carbon atoms, an alkylsulfonyl group having 1 to 20 carbon atoms, or an alkylsulfinyl group having 1 to 20 carbon atoms.

The above $X^1$ and $X^2$ may be substituted with one or more further groups, for example, halogen (preferably fluorine), an alkyl group having 1 to 10 carbon atoms, an alkoxy group having 1 to 10 carbon atoms, or an aryl group having 6 to 24 carbon atoms, and such groups may further be substituted with one or more substituents selected from the group consisting of halogen (preferably fluorine), an alkyl group having 1 to 5 carbon atoms, an alkoxy group having 1 to 5 carbon atoms, and a phenyl group.

In a preferred embodiment, $X^1$ and $X^2$ may be the same or different, and each is a halogen (particularly fluorine, chlorine, bromine, or iodine), benzoate, a carboxylate having 1 to 5 carbon atoms, an alkyl group having 1 to 5 carbon atoms, a phenoxy group, an alkoxy group having 1 to 5 carbon atoms, an alkyl thiol group having 1 to 5 carbon atoms, an aryl thiol group having 6 to 24 carbon atoms, an aryl group having 6 to 24 carbon atoms, or an alkyl sulfonate having 1 to 5 carbon atoms.

In a particularly preferred embodiment, $X^1$ and $X^2$ are the same and each is a halogen (particularly chlorine), $CF_3COO$, $CH_3COO$, $CFH_2COO$, $(CH_3)_3CO$, $(CF_3)_2(CH_3)CO$, $(CF_3)(CH_3)_2CO$, PhO (phenoxy), MeO (methoxy), EtO (ethoxy), tosylate ($p\text{-}CH_3\text{-}C_6H_4\text{-}SO_3$), mesylate (2,4,6-trimethylphenyl), or $CF_3SO_3$ (trifluoromethanesulfonate).

In the above general formulae (1), (2), and (3), $L^1$, $L^2$, and $L^3$ each independently represent a ligand, and are preferably neutral (uncharged) electron donors (also referred to as "electron-donating neutral ligands"). $L^1$, $L^2$, and $L^3$ may each independently be, for example, a phosphine, sulfonated phosphine, phosphate, phosphinic acid ester, phosphonite, arsine, stibine, ether, amine, amide, aryloxy, sulfonate, sulfoxide, carboxyl, nitrosyl, pyridine, thioether, or imidazolidine ligand. $L^1$, $L^2$, and $L^3$ may each independently be an arylphosphine ligand having 6 to 24 carbon atoms, an alkylphosphine or cycloalkylphosphine ligand having 1 to 10 or 3 to 20 carbon atoms, respectively, a sulfonated arylphosphine or sulfonated alkylphosphine ligand having 6 to 24 or 1 to 10 carbon atoms, respectively, an aryl phosphinic acid ester or alkyl phosphinic acid ester ligand having 6 to 24 or 1 to 10 carbon atoms, respectively, an aryl phosphonite or alkyl phosphonite ligand having 6 to 24 or 1 to 10 carbon atoms, respectively, an aryl phosphite or alkyl phosphite ligand having 6 to 24 or 1 to 10 carbon atoms, respectively, an aryl arsine or alkyl arsine ligand having 6 to 24 or 1 to 10 carbon atoms, respectively, an aryl amine or alkyl amine ligand having 6 to 24 or 1 to 10 carbon atoms, respectively, a pyridine ligand, an aryl sulfoxide or alkyl sulfoxide ligand having 6 to 24 or 1 to 10 carbon atoms, respectively, an aryl ether or alkyl ether ligand having 6 to 24 or 1 to 10 carbon atoms, respectively, or an aryl amide or alkyl amide ligand having 6 to 24 or 1 to 10 carbon atoms, respectively, and these may each be substituted with a phenyl group, and the phenyl group may optionally be further substituted with a halogen, an alkyl group having 1 to 5 carbon atoms, or an alkoxy group having 1 to 5 carbon atoms.

The term "phosphine" includes, for example, $PPh_3$, $P(p\text{-}Tol)_3$, $P(o\text{-}Tol)_3$, $PPh(CH_3)_2$, $P(CF_3)_3$, $P(p\text{-}FC_6H_4)_3$, $P(p\text{-}CF_3C_6H_4)_3$, $P(C_6H_4\text{-}SO_3Na)_3$, $P(CH_2C_6H_4\text{-}SO_3Na)_3$, $P(\text{isopropyl})_3$, $P(CHCH_3(CH_2CH_3))_3$, $P(\text{cyclopentyl})_3$, $P(\text{cyclohexyl})_3$, $P(\text{neopentyl})_3$, and $P(\text{neophenyl})_3$.

The term "phosphinic acid ester" includes, for example, triphenyl phosphinate, tricyclohexyl phosphinate, triisopropyl phosphinate, and methyl diphenyl phosphinate.

The term "phosphite" includes, for example, triphenyl phosphite, tricyclohexyl phosphite, tri-tert-butyl phosphite, triisopropyl phosphite, and methyl diphenyl phosphite.

The term "stibine" includes, for example, triphenylstibine, tricyclohexylstibine, and trimethylstibine.

The term "aryloxy" includes, for example, 2-tert-butyl-4,5-dimethylphenoxy.

The term "sulfonate" includes, for example, trifluoromethanesulfonate, tosylate, and mesylate.

The term "sulfoxide" includes, for example, $(CH_3)_2S(=O)$ and $(C_6H_5)_2S=O$.

The term "thioether" includes, for example, $CH_3SCH_3$, $C_6H_5SCH_3$, $CH_3OCH_2CH_2SCH_3$, and tetrahydrothiophene.

The term "pyridine" includes, for example, pyridine, picolines ($\alpha$-, $\beta$-, and $\gamma$-picoline), lutidines (2,3-, 2,4-, 2,5-, 2,6-, 3,4-, and 3,5-lutidine), collidine (2,4,6-trimethylpyridine), trifluoromethylpyridine, phenylpyridine, 4-(dimethylamino) pyridine, chloropyridines, bromopyridines, nitropyridines, quinoline, pyrimidine, pyrrole, imidazole, and phenylimidazole.

In the imidazolidine ligand, the hydrogen atoms bonded to the carbon or nitrogen atoms constituting the imidazolidine ring may be substituted with a straight-chain or branched alkyl group having 1 to 30 carbon atoms, a cycloalkyl group having 3 to 20 carbon atoms, an alkenyl group having 2 to 20 carbon atoms, an alkynyl group having 2 to 20 carbon atoms, an aryl group having 6 to 24 carbon atoms, a carboxylate having 1 to 20 carbon atoms, an alkoxy group having 1 to 20 carbon atoms, an alkenyloxy group having 2 to 20 carbon atoms, an alkynyloxy group having 2 to 20 carbon atoms, an aryloxy group having 6 to 20 carbon atoms, an alkoxycarbonyl group having 2 to 20 carbon atoms, an alkylthio group having 1 to 20 carbon atoms, an arylthio group having 6 to 20 carbon atoms, an alkylsulfonyl group having 1 to 20 carbon atoms, an alkylsulfonate having 1 to 20 carbon atoms, an arylsulfonate having 6 to 20 carbon atoms, or an alkylsulfinyl group having 1 to 20 carbon atoms.

In the above general formulae (1), (2), and (3), $R^1$, $R^2$, and $R^3$ each independently represent hydrogen, an alkyl group, a cycloalkyl group, an alkenyl group, an alkynyl group, an aryl group, an aralkyl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, where these groups may be substituted with one or more alkyl groups, halogens, alkoxy groups, aryl groups, or heteroaryl groups.

Further, as the alkyl group, an alkyl group having 1 to 30 carbon atoms is preferred; as the cycloalkyl group, a cycloalkyl group having 3 to 20 carbon atoms is preferred; as the alkenyl group, an alkenyl group having 2 to 20 carbon atoms is preferred; as the alkynyl group, an alkynyl group having 2 to 20 carbon atoms is preferred; as the aryl group, an aryl group having 6 to 24 carbon atoms is preferred; as the aralkyl group, an aralkyl group having 7 to 24 carbon atoms is preferred; as the carboxylate group, a carboxylate group having 1 to 20 carbon atoms is preferred; as the alkoxy group, an alkoxy group having 1 to 20 carbon atoms is preferred; as the alkenyloxy group, an alkenyloxy group having 2 to 20 carbon atoms is preferred; as the alkynyloxy group, an alkynyloxy group having 2 to 20 carbon atoms is preferred; as the aryloxy group, an aryloxy group having 6 to 24 carbon atoms is preferred; as the alkoxycarbonyl group, an alkoxycarbonyl group having 2 to 20 carbon atoms is preferred; as the alkylamino group, an alkylamino group having 1 to 30 carbon atoms is preferred; as the alkylthio group, an alkylthio group having 1 to 30 carbon atoms is preferred; as the arylthio group, an arylthio group having 6 to 24 carbon atoms is preferred; as the alkylsulfonyl group, an alkylsulfonyl group having 1 to 20 carbon atoms is preferred; and as the alkylsulfinyl group, an alkylsulfinyl group having 1 to 20 carbon atoms is preferred.

In one embodiment, one of $R^1$ and $R^2$ is hydrogen, and the other is an alkyl group having 1 to 20 carbon atoms, a cycloalkyl group having 3 to 10 carbon atoms, an alkenyl group having 2 to 20 carbon atoms, an alkynyl group having 2 to 20 carbon atoms, an aryl group having 6 to 24 carbon atoms, an aralkyl group having 7 to 24 carbon atoms, a carboxylate group having 1 to 20 carbon atoms, an alkoxy group having 1 to 20 carbon atoms, an alkenyloxy group having 2 to 20 carbon atoms, an alkynyloxy group having 2 to 20 carbon atoms, an aryloxy group having 6 to 24 carbon atoms, an alkoxycarbonyl group having 2 to 20 carbon atoms, an alkylamino group having 1 to 30 carbon atoms, an alkylthio group having 1 to 30 carbon atoms, an arylthio group having 6 to 24 carbon atoms, an alkylsulfonyl group having 1 to 20 carbon atoms, or an alkylsulfinyl group having 1 to 20 carbon atoms, and these groups may each be substituted with one or more alkyl groups, halogens, alkoxy groups, aryl groups, or heteroaryl groups.

In the above general formulae (1), (2), and (3), $L^1$ and $L^2$ may be bonded to each other to form a ring. The ring formed by the bonding of $L^1$ and $L^2$ may be aliphatic or aromatic, and may optionally be substituted and contain one or more hetero atoms. Examples of hetero atoms include oxygen, sulfur, nitrogen, and phosphorus.

In the above general formulae (1), (2), and (3), $R^1$ and $R^2$ may be bonded to each other to form a ring. The ring formed by $R^1$ and $R^2$ together with the common carbon atom to which they are bonded may be aliphatic or aromatic, and may optionally be substituted and contain one or more hetero atoms.

In the above general formulae (1), (2), and (3), $L^1$ and $R^1$ may be bonded to each other to form a ring. The ring formed by the bonding of $L^1$ and $R^1$ may be aliphatic or aromatic, and may optionally be substituted and contain one or more hetero atoms. Examples of hetero atoms include oxygen, sulfur, nitrogen, and phosphorus.

As the catalyst represented by the above general formula (1), a catalyst represented by any of the following structural formulae (1-1) to (1-3):

[Chem. 4]

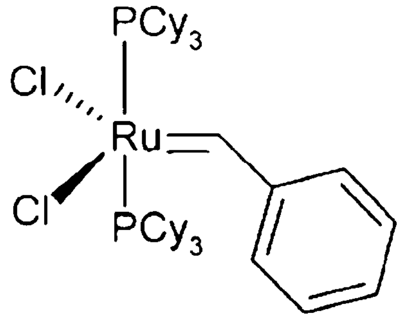

· · · (1-1)

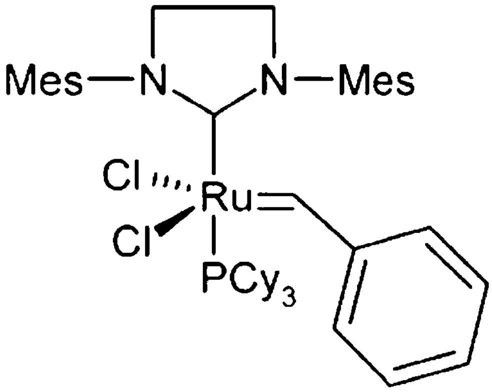

· · · (1-2)

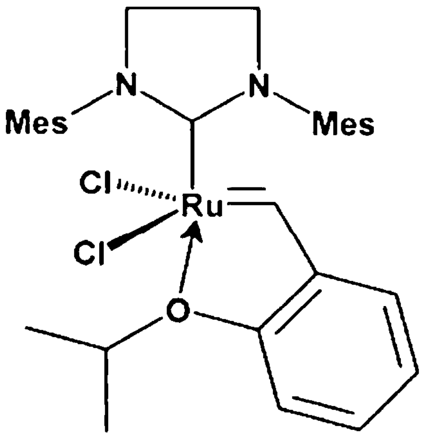

· · · (1-3)

[In the formulae, Cy represents a cyclohexyl group, and Mes represents a mesityl group (also referred to as "2,4,6-trimethylphenyl group")] is preferred.

The catalyst of structural formula (1-1) is referred to as a Grubbs first-generation catalyst, the catalyst of structural formula (1-2) is referred to as a Grubbs second-generation catalyst, and the catalyst of structural formula (1-3) is referred to as a Grubbs-Hoveyda second-generation catalyst. When a catalyst represented by any of structural formulae (1-1) to (1-3) is used, the decomposition reaction (metathesis decomposition) of diene rubber in the crosslinked rubber proceeds more rapidly.

As the catalyst represented by the above general formula (2), a catalyst represented by the following structural formula (2-1):

[Chem. 5]

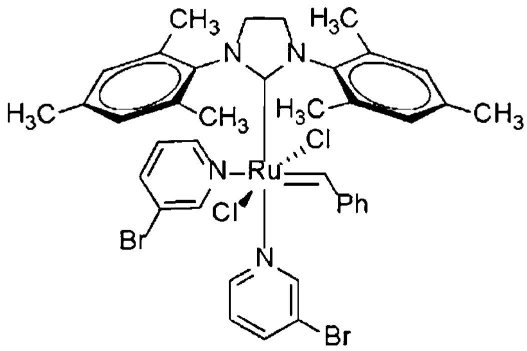

··· (2-1)

is preferred. The catalyst of structural formula (2-1) is referred to as a Grubbs third-generation catalyst. When a catalyst represented by structural formula (2-1) is used, the decomposition reaction (metathesis decomposition) of diene rubber in the crosslinked rubber proceeds more rapidly.

As the catalyst represented by the above general formula (3), a catalyst represented by the following structural formula (3-1):

[Chem. 6]

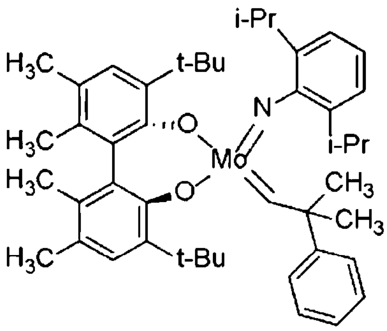

··· (3-1)

can be mentioned.

The amount of the catalyst is preferably 0.1 parts by mass or more, more preferably 1 part by mass or more, and preferably 10 parts by mass or less, more preferably 8 parts by mass or less, per 100 parts by mass of the diene rubber. If the amount of the catalyst is 0.1 parts by mass or more per 100 parts by mass of the diene rubber, the decomposition reaction of the diene rubber proceeds further, and if the amount of the catalyst is 10 parts by mass or less per 100 parts by mass of the diene rubber, it is preferable from the viewpoint of cost.

(Reaction Conditions, etc.)

The first decomposition step is preferably carried out at 20°C or higher and 200°C or lower. By carrying out the first decomposition step at 20°C or higher, the rate of the decomposition reaction of diene rubber in the crosslinked rubber is improved, and by carrying out the first decomposition step at 200°C or lower, decomposition of the catalyst (metathesis catalyst) represented by the above general formula (1), (2), or (3) can be suppressed, and after decomposition, the retention rate (selectivity) of the monomer skeleton of the diene rubber in the crosslinked rubber is improved. From the viewpoint of improving the decomposition reaction rate of diene rubber, the first decomposition step is more preferably carried out at 25°C or higher, and from the viewpoint of suppressing decomposition of the metathesis catalyst and improving the selectivity of the product retaining the monomer skeleton, more preferably at 100°C or lower.

The first decomposition step can be carried out at any pressure, including reduced pressure, atmospheric pressure, or increased pressure. As an example, the reaction pressure is preferably 1 kPa to 10 MPa, more preferably 10 kPa to 1 MPa, and even more preferably 50 kPa to 500 kPa.

In the method for decomposing crosslinked rubber of the present embodiment, the catalyst represented by the above general formula (1), (2), or (3) may be dissolved in a solvent, and the crosslinked rubber may be immersed in the

solvent to carry out the first decomposition step. By allowing the catalyst to act on the crosslinked rubber in a solvent, the decomposition reaction of diene rubber in the crosslinked rubber proceeds more readily.

Here, as the solvent, any solvent that does not inhibit the decomposition reaction can be used, and examples include ethers, aliphatic hydrocarbons, alicyclic hydrocarbons, and aromatic hydrocarbons (aromatic solvents). More specifically, as the solvent, tetrahydrofuran (THF), hexane, cyclohexane, pentane, cyclopentane, toluene, and xylene are preferred, and toluene and tetrahydrofuran are more preferred. When the solvent is selected from tetrahydrofuran, hexane, cyclohexane, pentane, cyclopentane, toluene, and xylene, the decomposition reaction of diene rubber in the crosslinked rubber proceeds even more readily.

The amount of the solvent is preferably 10 mL or more, more preferably 50 mL or more, and preferably 500 mL or less, more preferably 200 mL or less, per 1 g of the crosslinked rubber. If the amount of the solvent is 10 mL or more per 1 g of the crosslinked rubber, the decomposition reaction of diene rubber in the crosslinked rubber proceeds further, and if the amount of the solvent is 500 mL or less per 1 g of the crosslinked rubber, it is preferable from the viewpoint of cost.

The first decomposition step may be carried out in the presence of a chain transfer agent (CTA). Examples of the chain transfer agent include cis-1,4-diacetoxy-2-butene and cis-1,4-dibenzyloxy-2-butene.

The amount of the chain transfer agent is preferably in the range of 1 to 100 mol per 1 mol of the catalyst.

(Decomposition Product (Intermediate Decomposition Product))

In the method for decomposing crosslinked rubber of the present embodiment, it is preferable that, through the first decomposition step, 80 mass% or more of the diene rubber in the crosslinked rubber is decomposed into a diene oligomer having a weight-average molecular weight of 100 to 50,000. By decomposing 80 mass% or more of the diene rubber in the crosslinked rubber into a diene oligomer having a weight-average molecular weight of 100 to 50,000 by the first decomposition step, the yield of C4-C10 chemicals, particularly diene monomers, in the second decomposition step described later can be further improved. From the viewpoint of the yield of diene monomers after the second decomposition step, it is more preferable that 85 mass% or more of the diene rubber in the crosslinked rubber is decomposed into a diene oligomer having a weight-average molecular weight of 100 to 50,000 by the first decomposition step.

Here, in the present specification, the term "oligomer" refers to a substance having a weight-average molecular weight of 50,000 or less and containing two or more monomer units. The term "diene oligomer" refers to an oligomer containing two or more units derived from diene monomers (diene units). The weight-average molecular weight (Mw) can be measured by gel permeation chromatography (GPC).

<Second Decomposition Step>

The method for decomposing crosslinked rubber of the present embodiment includes a second decomposition step in which the decomposition product obtained in the first decomposition step is heated under an inert gas atmosphere and in the absence of a catalyst, at a heating rate of 800°C/min or more from 100°C to 450°C, and thermally decomposed at 450°C to 950°C.

In a preferred embodiment, the decomposition product obtained in the first decomposition step is heated under an inert gas atmosphere and in the absence of a catalyst, at a heating rate of 800°C/min or more from 100°C to 600°C, and thermally decomposed at 600°C to 950°C.

In another preferred embodiment, the decomposition product obtained in the first decomposition step is heated under an inert gas atmosphere and in the absence of a catalyst, at a heating rate of 2000°C/min or more from 100°C to 450°C, and thermally decomposed at 450°C to 950°C.

In yet another preferred embodiment, the decomposition product obtained in the first decomposition step is heated under an inert gas atmosphere and in the absence of a catalyst, at a heating rate of 2000°C/min or more from 100°C to 600°C, and thermally decomposed at 600°C to 950°C.

The method for decomposing crosslinked rubber of the present embodiment may include mixing the decomposition product obtained in the first decomposition step with at least one medium selected from organic solvents, fatty acid esters, and hydrocarbons, and thermally decomposing the mixture.

As the organic solvent, any solvent that does not inhibit the decomposition reaction can be used, and examples include aromatic hydrocarbons (aromatic solvents), chlorinated hydrocarbons, aliphatic hydrocarbons, alicyclic hydrocarbons, ethers, nitriles, and esters.

Specific examples thereof include, as aromatic hydrocarbons, toluene, xylene, ethylbenzene, trimethylbenzene, and propylbenzene; as chlorinated hydrocarbons, chloroform, dichloromethane, dichloroethane, trichloroethane, tetrachloroethane, tetrachloroethene, chlorobenzene, and dichlorobenzene; as aliphatic hydrocarbons, pentane, hexane, and octane; as alicyclic hydrocarbons, cyclohexane and cyclooctane; as ethers, tetrahydrofuran, methyl tetrahydrofuran, tetrahydropyran, and dioxane; as nitriles, benzonitrile; and as esters, ethyl acetate, propyl acetate, butyl acetate, ethyl propionate, and butyl propionate.

Among these, aromatic hydrocarbons are preferred from the viewpoints of reaction rate and availability. Specific examples thereof include toluene, xylene, and ethylbenzene. Among aromatic hydrocarbons, ethylbenzene is preferred over toluene from the viewpoint of reaction rate.

Examples of the fatty acid ester include esters of a fatty acid and an alcohol such as glycerin or aliphatic alcohol. Here, examples of the fatty acid include myristic acid, palmitic acid, palmitoleic acid, stearic acid, oleic acid, linoleic acid, linolenic acid, erucic acid, and the like, and it is preferable that the aliphatic alcohol has 12 to 24 carbon atoms. Specific examples of the fatty acid ester include rapeseed oil, soybean oil, olive oil, sunflower oil, safflower oil, corn oil, castor oil, jojoba oil, palm oil, and the like. These may be hydrogenated (hydrogen-added), and examples of hydrogenated fatty acid esters include hydrogenated rapeseed oil, hydrogenated jojoba oil, and the like. These fatty acid esters may be recycled or waste products, and, for example, waste cooking oil and the like may also be used. In addition, as the fatty acid ester in the case where the alcohol is glycerin, in addition to triglycerides, monoglycerides and diglycerides may also be used. The fatty acid moiety of the fatty acid ester preferably has 8 or more carbon atoms, more preferably 12 or more carbon atoms, and preferably 24 or fewer carbon atoms, more preferably 18 or fewer carbon atoms. When the fatty acid moiety of the fatty acid ester has 8 or more carbon atoms, the fatty acid ester is present in the reaction field during thermal decomposition and can sufficiently exert its effect, and the amount of hydrogen generated when the fatty acid ester is decomposed increases, so that more hydrogen can be supplied to the liquid polymer, thereby promoting the decomposition of the liquid polymer. Further, when the fatty acid moiety of the fatty acid ester has 24 or fewer carbon atoms, it is easily miscible with the liquid polymer.

Examples of the hydrocarbon include liquid paraffin, microcrystalline wax, asphalt-mixed naphthenic oil, polyethylene, polypropylene, and the like. Among these, liquid paraffin and microcrystalline wax are preferable, and microcrystalline wax is more preferable. The hydrocarbon preferably has 12 or more carbon atoms, more preferably 20 or more carbon atoms, and preferably 80 or fewer carbon atoms, more preferably 60 or fewer carbon atoms. When the hydrocarbon has 12 or more carbon atoms, the hydrocarbon is present in the reaction field during thermal decomposition and can sufficiently exert its effect, and the amount of hydrogen generated when the hydrocarbon is decomposed increases, so that more hydrogen can be supplied to the liquid polymer, thereby promoting the decomposition of the liquid polymer. Further, when the hydrocarbon has 80 or fewer carbon atoms, it is easily miscible with the liquid polymer.

(Heating Conditions)

In the decomposition method for crosslinked rubber of the present embodiment, the decomposition product obtained in the first decomposition step or the mixture is heated under an inert gas atmosphere and in the absence of a catalyst, at a heating rate of 800°C/min or more from 100°C to 450°C (heating step). If the heating rate from 100°C to 450°C is less than 800°C/min, the proportion decomposed during heating increases, and during heating (i.e., at a temperature lower than the target decomposition temperature), decomposition products with a higher molecular weight than the C4-C10 chemicals are generated from the decomposition product obtained in the first decomposition step or the mixture and volatilize, resulting in a decrease in the yield of the C4-C10 chemicals (particularly diene monomers) finally obtained. The heating rate from 100°C to 450°C is preferably 2000°C/min or more, and when the heating rate is 2000°C/min or more, the generation of high molecular weight decomposition products from the decomposition product obtained in the first decomposition step or the mixture can be further suppressed, and the yield of C4-C10 chemicals (particularly diene monomers) can be further improved.

In a preferred embodiment, the decomposition product obtained in the first decomposition step or the mixture is heated under an inert gas atmosphere and in the absence of a catalyst, at a heating rate of 800°C/min or more from 100°C to 600°C (heating step). When the heating rate from 100°C to 600°C is 800°C/min or more, the proportion decomposed during heating decreases, and during heating (i.e., at a temperature lower than the target decomposition temperature), the generation and volatilization of decomposition products with a higher molecular weight than the C4-C10 chemicals from the decomposition product obtained in the first decomposition step or the mixture can be suppressed, resulting in an improved yield of the C4-C10 chemicals (particularly diene monomers) finally obtained. The heating rate from 100°C to 600°C is preferably 2000°C/min or more, and when the heating rate is 2000°C/min or more, the generation of high molecular weight decomposition products from the decomposition product obtained in the first decomposition step or the mixture can be further suppressed.

(Reaction Conditions, etc.)

In the second decomposition step of the decomposition method for crosslinked rubber of the present embodiment, after the above heating, thermal decomposition is performed under an inert gas atmosphere and in the absence of a catalyst, at 450°C to 950°C (thermal decomposition step). By performing the thermal decomposition in the second decomposition step at 450°C or higher, the decomposition reaction rate of the decomposition product obtained in the first decomposition step or the mixture is improved, and the yield of the C4-C10 chemicals (particularly diene monomers) finally

obtained is improved. Further, by performing the thermal decomposition in the second decomposition step at 950°C or lower, gasification and polycyclic aromatization of the decomposition products can be suppressed, and after decomposition, the retention rate (selectivity) of the monomer skeleton of the diene oligomer (liquid component) obtained in the first decomposition step is improved, resulting in an improved yield of the C4-C10 chemicals (particularly diene monomers) finally obtained. The temperature of the thermal decomposition in the second decomposition step is preferably 600°C or higher, more preferably 650°C or higher, from the viewpoint of improving the decomposition reaction rate of the decomposition product obtained in the first decomposition step or the mixture. Further, the temperature of the thermal decomposition in the second decomposition step is preferably 850°C or lower from the viewpoint of improving the selectivity of the product retaining the monomer skeleton. Therefore, by performing the thermal decomposition in the second decomposition step at 600°C to 950°C, the yield of the C4-C10 chemicals (particularly diene monomers) obtained from the decomposition product obtained in the first decomposition step or the mixture can be further improved, and by performing it at 650°C to 850°C, the yield of the C4-C10 chemicals (particularly diene monomers) obtained from the decomposition product obtained in the first decomposition step or the mixture can be further enhanced.

The time for the thermal decomposition in the second decomposition step is not particularly limited. As an example, the heating time after reaching the target temperature for the thermal decomposition in the second decomposition step is preferably 0.1 seconds to 5 minutes, more preferably 0.1 seconds to 1 minute. By performing the thermal decomposition in the second decomposition step for 0.1 seconds or more, the decomposition rate of the decomposition product obtained in the first decomposition step or the mixture is improved. On the other hand, if the decomposition time is too long, the skeleton (double bonds, etc.) of the constituent monomers of the diene oligomer (liquid component) obtained in the first decomposition step may be decomposed, or the decomposition products may be gasified or polycyclic aromatized, but by performing the thermal decomposition in the second decomposition step for 5 minutes or less, decomposition of the monomer skeleton and gasification or polycyclic aromatization of the decomposition products can be suppressed, and after decomposition, the retention rate (selectivity) of the monomer skeleton of the constituent monomers of the diene oligomer (liquid component) obtained in the first decomposition step is improved.

The method of such rapid thermal decomposition is not particularly limited, but examples include batch type, fixed bed type, moving bed type, rotary kiln type, fluidized bed type, jet bed type, microwave heating type, plasma heating type, high-temperature liquid spray type, single-screw extrusion type, twin-screw extrusion type, free-fall type, electrified spatiotemporal heating, wire mesh heating (Hoekstra et al., Chem. Eng. J., 191, 45 (2012)), and the like.

The heating and thermal decomposition in the second decomposition step are performed under an inert gas atmosphere. By performing the heating and thermal decomposition in the second decomposition step under an inert gas atmosphere, oxidation and reduction of the decomposition product obtained in the first decomposition step or the mixture and the decomposition product generated in the second decomposition step can be suppressed, and in particular, hydrogenation of the double bonds in the generated diene monomers can be suppressed. Here, examples of the inert gas include nitrogen, carbon dioxide, argon, helium, and the like.

To perform the heating and thermal decomposition in the second decomposition step under an inert gas atmosphere, for example, when using a batch-type reactor, it is sufficient to make the atmosphere charged into the reactor an inert gas, and when using a flow-type reactor, it is sufficient to make the atmosphere flowing through the reactor an inert gas. Note that hydrogen may be generated during the heating and thermal decomposition in the second decomposition step, but the hydrogen generated is not considered as part of the atmosphere for the heating and thermal decomposition in the second decomposition step.

The heating and thermal decomposition in the second decomposition step can be carried out at any pressure, and may be performed under reduced pressure, at atmospheric pressure, or under increased pressure, but it is preferable to perform them under reduced pressure or at atmospheric pressure. As an example, the pressure for the heating and thermal decomposition in the second decomposition step is preferably 1000 kPa to 65 kPa. By performing the heating and thermal decomposition under reduced pressure or at atmospheric pressure, polymerization (repolymerization) of oligomers and diene monomers in the decomposition products can be suppressed.

Further, when the second decomposition step is performed, for example, under increased pressure, the decomposition product obtained in the first decomposition step or the mixture may be thermally decomposed in a solvent. Here, as the solvent, any solvent that does not inhibit the decomposition reaction can be used, and examples include ethers, aliphatic hydrocarbons, alicyclic hydrocarbons, aromatic hydrocarbons (aromatic solvents), and the like. More specifically, preferred solvents include tetrahydrofuran (THF), hexane, cyclohexane, pentane, cyclopentane, toluene, and xylene, with toluene and tetrahydrofuran being more preferable.

The amount of the solvent used is preferably 10 mL or more, more preferably 50 mL or more, and preferably 500 mL or less, more preferably 200 mL or less, per 1 g of the decomposition product obtained in the first decomposition step or the mixture (or the intermediate product supplied to the second decomposition step). If the amount of the solvent used is 10 mL or more per 1 g of the decomposition product obtained in the first decomposition step or the mixture (or the intermediate product supplied to the second decomposition step), the decomposition reaction proceeds further, and if the amount of the solvent used is 500 mL or less per 1 g of the decomposition product obtained in the first decomposition step or the mixture

(or the intermediate product supplied to the second decomposition step), it is preferable from the viewpoint of cost.

The second decomposition step is performed in the absence of a catalyst (i.e., without using a catalyst). By not using a catalyst in the second decomposition step, costs can be reduced. Here, "in the absence of a catalyst" means that there is no catalyst having an effect of promoting the decomposition reaction in the reaction system of the second decomposition step.

(Decomposition Products)

In the decomposition method for crosslinked rubber of the present embodiment, the second decomposition step yields, as decomposition products, C4-C1 0 chemicals (particularly diene monomers) and the like.

In the decomposition method for crosslinked rubber of the present embodiment, it is preferable that, by the second decomposition step, 20 mass% or more of the diene oligomer having a weight-average molecular weight of 100 to 50,000 obtained by the first decomposition step is decomposed into C4-C10 chemicals. By improving the yield of C4-C10 chemicals, the yield of reusable monomers and oligomers is improved, and the economic and environmental value of the decomposition method is further enhanced. From the viewpoint of the yield of reusable monomers and oligomers, it is more preferable that, by the second decomposition step, 30 mass% or more of the diene oligomer having a weight-average molecular weight of 100 to 50,000 obtained by the first decomposition step is decomposed into C4-C10 chemicals.

Here, the total amount of C4-C10 chemicals, particularly diene monomers, in the decomposition products obtained in the second decomposition step may depend not only on the above reaction conditions but also on the reaction apparatus used. The preferred range of the total amount of C4-C10 chemicals, particularly diene monomers, in the present embodiment is the preferred range when using the reaction apparatus described in the examples below, and when a more suitable reaction apparatus is used in the present disclosure, the total amount of C4-C10 chemicals, particularly diene monomers, may be further increased.

Further, in the decomposition method for crosslinked rubber of the present embodiment, it is preferable that, through the first decomposition step and the second decomposition step, 0.1 mass% or more of the diene rubber in the crosslinked rubber is decomposed into C4-C10 chemicals. By improving the yield of C4-C10 chemicals, the yield of reusable monomers is improved, and the economic and environmental value of the decomposition method is further enhanced. From the viewpoint of the yield of reusable monomers, it is more preferable that, through the first decomposition step and the second decomposition step, 20 mass% or more of the diene rubber in the crosslinked rubber is decomposed into C4-C10 chemicals.

The C4-C10 chemicals as decomposition products vary depending on the type of diene rubber in the crosslinked rubber to be decomposed, but examples include hydrocarbons having 4 to 10 carbon atoms and derivatives thereof, such as 1,3-butadiene, isoprene, 1,3-pentadiene, 2,3-dimethyl-1,3-butadiene, benzene, toluene, ethylbenzene, xylene, limonene, and the like, with 1,3-butadiene and isoprene being preferable. The proportion of the total amount of C4-C10 chemicals, particularly diene monomers, in the decomposition products can be controlled, for example, by the reaction conditions such as the reaction temperature and reaction time in the second decomposition step.

<Others>

The decomposition method for crosslinked rubber of the present embodiment may further include another step in addition to the above first decomposition step and second decomposition step. Such steps include, for example, a pretreatment step (such as cutting or pulverizing) of the crosslinked rubber.

Further, when the crosslinked rubber contains carbon black, it is preferable to include a step of recovering carbon black from the decomposition product (intermediate decomposition product) between the first decomposition step and the second decomposition step.

The decomposition method for crosslinked rubber of the present embodiment can be carried out using either a batch-type reactor or a flow-type reactor.

Further, the decomposition products after the decomposition reaction can be separated and recovered by filtration, distillation, or the like, or recovered by precipitation using a poor solvent, and reused. In addition, the diene monomers finally obtained from the crosslinked rubber can be reused as raw materials for diene rubber (polymer).

EXAMPLES

The present disclosure will be described in more detail below with reference to examples, but the present disclosure is not limited to the following examples in any way.

<Measurement of Molecular Weight>

The weight-average molecular weight (Mw), number-average molecular weight (Mn), and molecular weight distribution (D = Mw/Mn) in terms of polystyrene of the decomposition product (intermediate decomposition product) were determined by gel permeation chromatography (hereinafter, sometimes referred to as GPC analysis; solvent delivery unit: LC-20AB manufactured by Shimadzu Corporation; column: combination of KF-803 and KF-804 manufactured by Showa Denko K.K. or combination of G2000HXL and G4000HXL manufactured by Tosoh Corporation; detector: differential refractometer RID-10A manufactured by Shimadzu Corporation; analysis system: LabSolutions manufactured by Shimadzu Corporation; eluent: tetrahydrofuran), using monodisperse standard polystyrene as a reference. The measurement temperature was 40°C.

<Decomposition Rate in First Decomposition Step>

The decomposition rate in the first decomposition step was calculated based on the following formula by recovering the unreacted solid rubber after the reaction, measuring its weight, and determining the ratio to the weight of the rubber before the reaction. The decomposition rate was set to 100% when no solid rubber remained after the reaction.

Decomposition rate in the first decomposition step (%) = {1 - (weight of unreacted solid rubber after reaction/weight of rubber before reaction)} $\times$ 100

<Structural Formula of Catalyst Used>

The structural formula of the catalyst used in the first decomposition step is as follows.

[Chem. 7]

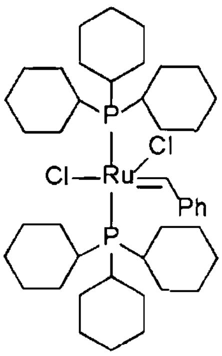

G1

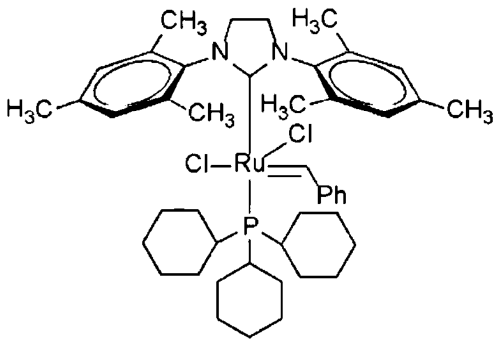

G2

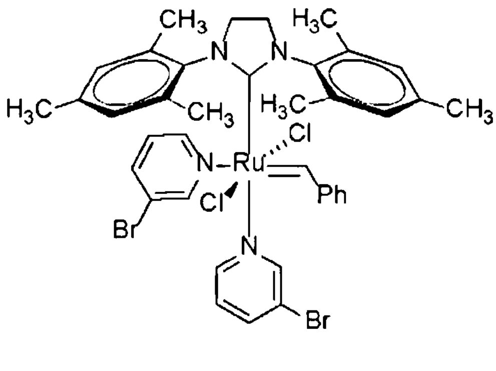

G3

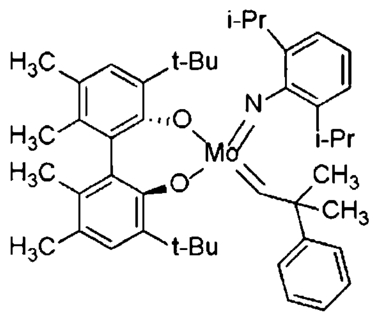

Mo cat

<Preparation of Crosslinked Rubber Sample>

(Crosslinked Rubber Sample A)

To 100.1 parts by mass of natural rubber were added 50.0 parts by mass of carbon black, 1.0 part by mass of antioxidant 6PPD [N-phenyl-N'-(1,3-dimethylbutyl)-p-phenylenediamine], 2.0 parts by mass of stearic acid, 2.5 parts by mass of zinc oxide, 1.5 parts by mass of vulcanization accelerator (N-cyclohexyl-2-benzothiazolylsulfenamide), and 4.5 parts by mass of sulfur to prepare a rubber composition, and the rubber composition was heat-crosslinked to prepare crosslinked rubber.

The obtained crosslinked rubber was cut into pieces with sides of about 2 to 6 mm to prepare a crosslinked rubber sample. In addition, a crosslinked rubber sample (with sides of about 1 mm or less) was also prepared by further cryogenic pulverization after cutting.

(Crosslinked Rubber Sample B)

To 100.0 parts by mass of natural rubber were added 50.0 parts by mass of carbon black, 2.0 parts by mass of antioxidant 6PPD [N-phenyl-N'-(1,3-dimethylbutyl)-p-phenylenediamine], 1.0 part by mass of antioxidant trimethyldihydroquinoline polymer, 2.0 parts by mass of stearic acid, 2.25 parts by mass of zinc oxide, 0.6 part by mass of vulcanization accelerator (N-cyclohexyl-2-benzothiazolylsulfenamide), and 1.8 parts by mass of sulfur to prepare a rubber composition, and the rubber composition was heat-crosslinked to prepare crosslinked rubber.

The obtained crosslinked rubber was subjected to cryogenic pulverization after cutting to prepare a crosslinked rubber sample (with sides of about 1 mm or less).

<Examples of First Decomposition Step>

(Example 1-1)

0.125 g of the above crosslinked rubber sample A (sample subjected only to cutting) was added to 10 mL of tetrahydrofuran (THF), and stirred at 25°C for 24 hours to swell the rubber. 24 mg of second-generation Grubbs catalyst (G2) was added, and the mixture was further stirred at 25°C for 24 hours to carry out a metathesis decomposition reaction. After the reaction, the reaction was terminated by adding 10 mL of methanol and 2.5 mL of ethyl vinyl ether. No residual rubber sample remained after the reaction, and the decomposition rate of the rubber sample was calculated to be 100%. Subsequently, the solvent was removed under reduced pressure to obtain a liquid polymer and carbon black. A portion of the mixture was taken, tetrahydrofuran was added, and carbon black was removed by filtration using a syringe filter, and the molecular weight of the liquid polymer was measured by GPC analysis. The results are presented in Table 1.

(Examples 1-2 to 1-10)

The reaction of the first decomposition step was carried out in the same manner as in Example 1-1, except that the reaction conditions (type and amount of catalyst, type and amount of solvent, and reaction scale) were changed. The results are presented in Table 1.

(Example 1-11)

0.125 g of the above crosslinked rubber sample A (sample subjected to cutting and then cryogenic grinding) was added to 10 mL of tetrahydrofuran and 24 mg of second-generation Grubbs catalyst (G2), and stirred at 25°C for 24 hours to carry out a metathesis decomposition reaction. After the reaction, the reaction was terminated by adding 10 mL of methanol and 2.5 mL of ethyl vinyl ether. No residual rubber sample remained after the reaction, and the decomposition rate of the rubber sample was calculated to be 100%. Subsequently, the solvent was removed under reduced pressure to obtain a liquid polymer and carbon black. A portion of the mixture was taken, tetrahydrofuran was added, and carbon black was removed by filtration using a syringe filter, and the molecular weight of the liquid polymer was measured by GPC analysis. The results are presented in Table 1.

(Example 1-12)

0.125 g of the above crosslinked rubber sample A (sample subjected only to cutting) was added to 10 mL of tetrahydrofuran, and stirred at room temperature for 24 hours to swell the rubber. Thereafter, 40 mg of cis-1,4-diacetoxy-2-butene was added as a chain transfer agent (CTA), and 24 mg of second-generation Grubbs catalyst (G2) was added, and

metathesis decomposition was carried out for 24 hours. After the reaction, the reaction was terminated by adding 10 mL of methanol and 2.5 mL of ethyl vinyl ether. No residual rubber sample remained after the reaction, and the decomposition rate of the rubber sample was calculated to be 100%. Subsequently, the solvent was removed under reduced pressure to obtain a liquid polymer and carbon black. A portion of the reaction mixture was taken, tetrahydrofuran was added, and carbon black was removed by filtration using a syringe filter, and the molecular weight of the liquid polymer was measured by GPC analysis. The results are presented in Table 1.

(Example 1-13)

0.125 g of the above crosslinked rubber sample B (sample subjected to cutting and then cryogenic grinding) was added to 10 mL of tetrahydrofuran and 8 mg of second-generation Grubbs catalyst (G2), and stirred at 25°C for 24 hours to carry out a metathesis decomposition reaction. No residual rubber sample remained after the reaction, and the decomposition rate of the rubber sample was calculated to be 100%. The reaction solution was diluted with tetrahydrofuran, and carbon black was separated by centrifugation, and the carbon black was washed with tetrahydrofuran. The initial supernatant and the washing solution were combined, concentrated under reduced pressure to obtain a liquid polymer. A portion thereof was taken, and the molecular weight of the liquid polymer was measured by GPC analysis. The results are presented in Table 1.

(Examples 1-14 to 1-23)

The reaction of the first decomposition step was carried out in the same manner as in Example 1-13, except that the reaction conditions (amount of catalyst, type and amount of solvent, and reaction scale) were changed. The results are presented in Table 1.

[Table 1]

| Examples | Rubber sample | Rubber weight1) (g) | Catalyst | Catalyst amount (mg) | Solvent | Solvent amount (mL) | CTA | CTA amount (mg) | Decomposition rate (%) | Mw | Mn | D |
|---|---|---|---|---|---|---|---|---|---|---|---|---|
| Example 1-1 | A | 0.125 | G2 | 24 | THF | 10 | - | - | 100 | 610 | 390 | 1.6 |
| Example 1-2 | A | 0.125 | G1 | 24 | THF | 10 | - | - | 1 | -2) | -2) | -2) |
| Example 1-3 | A | 0.125 | G3 | 24 | THF | 10 | - | - | 100 | 1300 | 450 | 2.9 |
| Example 1-4 | A | 0.125 | Mo cat | 24 | THF | 10 | - | - | 4 | -2) | -2) | -2) |
| Example 1-5 | A | 0.125 | G2 | 16 | THF | 10 | - | - | 83 | 650 | 380 | 1.7 |
| Example 1-6 | A | 0.125 | G2 | 48 | THF | 10 | - | - | 100 | 680 | 400 | 1.7 |
| Example 1-7 | A | 1.25 | G2 | 24 | THF | 100 | - | - | 100 | 700 | 400 | 1.8 |
| Example 1-8 | A | 2.5 | G2 | 24 | THF | 200 | - | - | 100 | 820 | 420 | 2.0 |
| Example 1-9 | A | 0.125 | G2 | 24 | Toluene | 10 | - | - | 85 | 580 | 390 | 1.5 |
| Example 1-10 | A | 0.125 | G2 | 24 | Dichloromethane | 10 | - | - | 85 | 650 | 400 | 1.6 |
| Example 1-11 | A | 0.125 | G2 | 24 | THF | 10 | - | - | 100 | 7000 | 700 | 10 |
| Example 1-12 | A | 0.125 | G2 | 24 | THF | 10 | cis-1,4-Diacetoxy -2-butene | 40 | 100 | 850 | 480 | 1.8 |
| Example 1-13 | B | 0.125 | G2 | 8 | THF | 5 | - | - | 100 | 8700 | 640 | 13 |
| Example 1-14 | B | 0.625 | G2 | 41 | THF | 25 | - | - | 100 | 3400 | 540 | 6.3 |

(continued)

| Examples | Rubber sample | Rubber weight[1)] (g) | Catalyst | Catalyst amount (mg) | Solvent | Solvent amount (mL) | CTA | CTA amount (mg) | Decomposition rate (%) | Mw | Mn | D |
|---|---|---|---|---|---|---|---|---|---|---|---|---|
| Example 1-15 | B | 1.25 | G2 | 80 | THF | 50 | - | - | 100 | 4300 | 590 | 7.3 |
| Example 1-16 | B | 0.125 | G2 | 8 | Toluene | 5 | - | - | 100 | 670 | 400 | 1.7 |
| Example 1-17 | B | 0.125 | G2 | 8 | Hexane | 5 | - | - | 100 | 780 | 440 | 1.8 |
| Example 1-18 | B | 0.125 | G2 | 8 | Diethyl ether | 5 | - | - | 100 | 950 | 450 | 2.1 |
| Example 1-19 | B | 0.125 | G2 | 8 | Dichloromethane | 5 | - | - | 100 | 850 | 420 | 2.0 |
| Example 1-20 | B | 0.125 | G2 | 6 | Toluene | 5 | - | - | 100 | 610 | 400 | 1.5 |
| Example 1-21 | B | 0.125 | G2 | 6 | Hexane | 5 | - | - | 100 | 660 | 400 | 1.6 |
| Example 1-22 | B | 0.125 | G2 | 6 | Diethyl ether | 5 | - | - | 100 | 870 | 470 | 1.9 |
| Example 1-23 | B | 0.6 | G2 | 40 | THF | 10 | - | - | 100 | 10200 | 6600 | 1.5 |

(Notes for Table 1)

1) In Examples 1-1 to 1-10 and Example 1-12, samples subjected only to cutting of the crosslinked rubber were used, and in Example 1-11 and Examples 1-13 to 1-23, samples subjected to cryogenic grinding after cutting of the crosslinked rubber were used. When samples subjected to cryogenic grinding were used, the step of swelling the rubber was omitted.
2) GPC was not measured.

<Examples of Second Decomposition Step>

(Examples 2-1 to 2-3)

A reaction tube was packed with 0.1 g of a liquid rubber sample (liquid polyisoprene LIR-30, manufactured by Kuraray Co., Ltd.) wrapped in quartz wool (manufactured by Tosoh Corporation, fine fiber diameter: 2-6 μm), and quartz wool was packed on both the upstream and downstream sides. The upstream side of the reaction tube was provided with a helium introduction line, and the downstream side was provided with a cooling trap filled with chloroform (60% ethylene glycol aqueous solution, cooled to -20°C), and the gas passing through the trap was collected in a gas bag.
Under conditions of a helium flow rate of 50 mL/min, the liquid rubber sample in the reaction tube was slid into the heated zone of an electric furnace heated to 500°C, 600°C, or 700°C, and heated at that temperature for 3 minutes to perform thermal decomposition. At this time, the temperature of the crosslinked rubber sample was monitored with a thermocouple, and the heating rate was determined.
After completion of the reaction, the reaction tube was cooled, the products deposited in the reaction tube and trap were collected, and the gaseous products were collected in a gas bag. The mass ratio (yield) of each product is presented in Table 2.
Furthermore, by gas chromatography (GC), the yields of isoprene, limonene, toluene, xylene, other aromatic compounds, and other aliphatic compounds in the liquid products were measured, and the total yield of C4-C10 chemicals was determined.
The results are collectively presented in Table 2.

(Example 2-4)

Except that the liquid rubber sample was changed to liquid polyisoprene LIR-50 (manufactured by Kuraray Co., Ltd.), and 0.1 g of liquid polyisoprene was supported on 0.5 g of quartz sand instead of quartz wool, and that heating was performed at the heating rate presented in Table 2, the products were collected in the same manner as in Example 2-3, and the gaseous products were also collected in a gas bag. The mass ratio (yield) of each product is presented in Table 2.
Furthermore, by gas chromatography (GC), the yields of isoprene, limonene, toluene, xylene, other aromatic compounds, and other aliphatic compounds in the liquid products were measured, and the total yield of C4-C10 chemicals was determined.
The results are collectively presented in Table 2.

(Example 2-5)

Except that the liquid rubber sample was changed to liquid polyisoprene LIR-30 (manufactured by Kuraray Co., Ltd.), the products were collected in the same manner as in Example 2-4, and the gaseous products were also collected in a gas bag. The mass ratio (yield) of each product is presented in Table 2.
Furthermore, by gas chromatography (GC), the yields of isoprene, limonene, toluene, xylene, other aromatic compounds, and other aliphatic compounds in the liquid products were measured, and the total yield of C4-C10 chemicals was determined.
The results are collectively presented in Table 2.

(Example 2-6)

Except that the liquid rubber sample was changed to the liquid polymer obtained in Example 1-23, the products were collected in the same manner as in Example 2-4, and the gaseous products were also collected in a gas bag. The mass ratio (yield) of each product is presented in Table 2.
Furthermore, by gas chromatography (GC), the yields of isoprene, limonene, toluene, xylene, other aromatic

compounds, and other aliphatic compounds in the liquid products were measured, and the total yield of C4-C10 chemicals was determined.

The results are collectively presented in Table 2.

[Table 2]

| | | | Example 2-1 | Example 2-2 | Example 2-3 | Example 2-4 | Example 2-5 | Example 2-6 |
|---|---|---|---|---|---|---|---|---|
| Heating rate from 100°C to 450°C | | °C/min | 1538 | 1589 | 2190 | 2821 | 2821 | 2821 |
| Heating rate from 100°C to 600°C | | °C/min | - | 1589 | 2190 | 2821 | 2821 | 2821 |
| Decomposition temperature | | °C | 500 | 600 | 700 | 700 | 700 | 700 |
| Yield of gaseous products *1 | | Mass% | 0.6 | 3.5 | 11.9 | 5.7 | 7.7 | 5.8 |
| Yield of liquid products *2 | | Mass% | 19.3 | 28.8 | 37.9 | 43.9 | 39.2 | 36.1 |
| (Breakdown) | Yield of isoprene | Mass% | 13.8 | 17.6 | 21.5 | 19.4 | 22.5 | 18.4 |
| | Yield of limonene | Mass% | 5.3 | 6.5 | - | - | - | - |
| | Toluene | Mass% | - | 1.4 | 6.7 | 7.7 | 4.4 | 3.5 |
| | Xylene | Mass% | - | 1.1 | 4.6 | 3.4 | 3.2 | 2.6 |
| | Yield of other C4-C10 aromatic compounds | Mass% | - | 0.6 | 3.5 | 5.8 | 3.8 | 5.8 |
| | Yield of other C11 or higher aromatic compounds | Mass% | - | Less than 0.1 | 0.5 | 0.6 | 0.2 | 0.6 |
| | Yield of other aliphatic compounds | Mass% | 0.2 | 1.6 | 1.1 | 7.0 | 5.1 | 5.3 |
| Total yield of C4-C10 compounds | | Mass% | 19.1 | 27.2 | 36.3 | 43.3 | 38.9 | 35.6 |
| Yield of oligomers *3 | | Mass% | 77.0 | 64.2 | 46.1 | 46.6 | 51.8 | 55.1 |
| Yield of solid products *4 | | Mass% | 3.1 | 3.4 | 4.1 | 3.8 | 1.3 | 3.0 |

*1 Yield of gaseous product: Value calculated from the amount of decomposition products collected in the gas bag
*2 Yield of liquid products: Value calculated from the amount of components that could be qualitatively analyzed by gas chromatography (GC) out of the total amount of (1) decomposition products collected in the cooling trap and (2) components adhering to the reaction tube and dissolved in chloroform
*3 Yield of oligomers: Value calculated from the amount of components that could not be qualitatively analyzed by gas chromatography (GC) out of the total amount of (1) decomposition products collected in the cooling trap and (2) components adhering to the reaction tube and dissolved in chloroform
*4 Yield of solid products: Value calculated from the sum of (1) the amount obtained by subtracting the content of carbon black in the crosslinked rubber sample from the residue of the thermal decomposition reaction, and (2) the amount of components adhering to the reaction tube and not dissolved in chloroform

From Table 2, it can be seen that by heating at a heating rate of 800°C/min or more from 100°C to 450°C and

performing thermal decomposition at 450°C to 950°C, C4-C10 chemicals, particularly isoprene (diene monomer), can be obtained at high yield.

From the results of Examples 1-1 to 1-23 (first decomposition step) and the results of Examples 2-1 to 2-6 (rapid heating thermal decomposition of liquid polymer), it is inferred that, by heating the decomposition product obtained in the first decomposition step of the method for decomposing crosslinked rubber of the present disclosure under an inert gas atmosphere and in the absence of a catalyst, at a heating rate of 800°C/min or more from 100°C to 450°C and performing thermal decomposition at 450°C to 950°C, C4-C10 chemicals, particularly isoprene (diene monomer), can be obtained at high yield.

## Claims

**1.** A method for decomposing crosslinked rubber, comprising:

a first decomposition step of decomposing crosslinked rubber containing diene rubber using a catalyst represented by general formula (1), (2), or (3), shown below:

[Chem. 1]

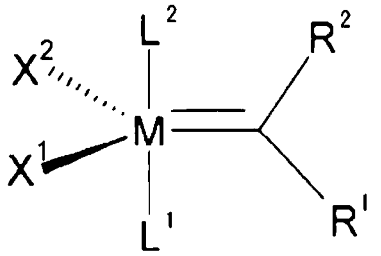

··· (1)

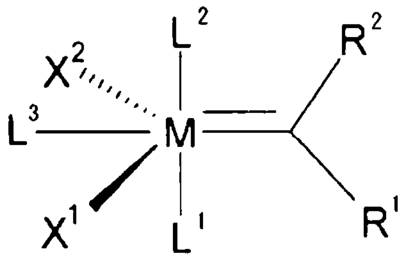

··· (2)

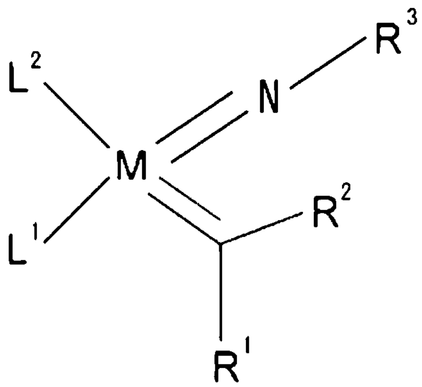

··· (3)

where, in general formulae (1), (2), and (3), M is ruthenium, titanium, molybdenum, or tungsten,
$X^1$ and $X^2$ each independently represent a ligand,
$L^1$, $L^2$, and $L^3$ each independently represent a ligand,
$R^1$, $R^2$, and $R^3$ each independently represent hydrogen, an alkyl group, a cycloalkyl group, an alkenyl group, an alkynyl group, an aryl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, where these groups may be substituted with one or more alkyl groups, halogens, alkoxy groups, aryl groups, or heteroaryl groups,
$L^1$ and $L^2$ may be bonded to each other to form a ring,
$R^1$ and $R^2$ may be bonded to each other to form a ring, and
$L^1$ and $R^1$ may be bonded to each other to form a ring; and

a second decomposition step of heating a decomposition product obtained in the first decomposition step under an inert gas atmosphere and in the absence of a catalyst, at a heating rate of 800°C/min or more from 100°C to 450°C, and performing thermal decomposition at 450°C to 950°C.

**2.** A method for decomposing crosslinked rubber, comprising:

a first decomposition step of decomposing crosslinked rubber containing diene rubber using a catalyst represented by general formula (1), (2), or (3), shown below:

[Chem. 2]

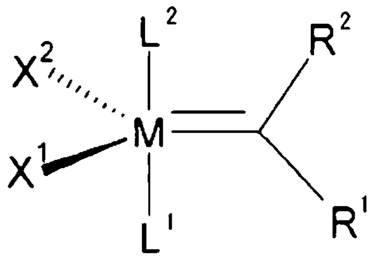

··· (1)

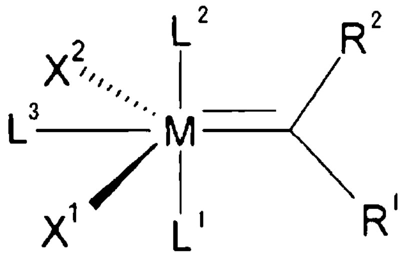

··· (2)

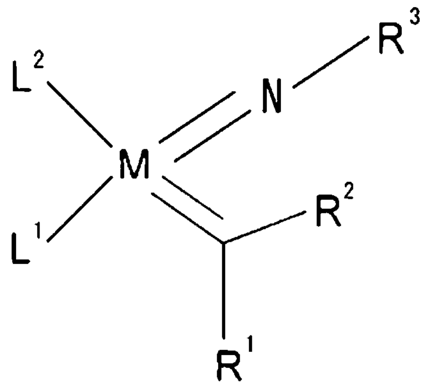

··· (3)

where, in general formulae (1), (2), and (3), M is ruthenium, titanium, molybdenum, or tungsten,

$X^1$ and $X^2$ each independently represent a ligand,
$L^1$, $L^2$, and $L^3$ each independently represent a ligand,
$R^1$, $R^2$, and $R^3$ each independently represent hydrogen, an alkyl group, a cycloalkyl group, an alkenyl group, an alkynyl group, an aryl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, where these groups may be substituted with one or more alkyl groups, halogens, alkoxy groups, aryl groups, or heteroaryl groups,
$L^1$ and $L^2$ may be bonded to each other to form a ring,
$R^1$ and $R^2$ may be bonded to each other to form a ring, and
$L^1$ and $R^1$ may be bonded to each other to form a ring; and
a second decomposition step of heating a decomposition product obtained in the first decomposition step under an inert gas atmosphere and in the absence of a catalyst, at a heating rate of 800°C/min or more from 100°C to 600°C, and performing thermal decomposition at 600°C to 950°C.

**3.** A method for decomposing crosslinked rubber, comprising:

a first decomposition step of decomposing crosslinked rubber containing diene rubber using a catalyst represented by general formula (1), (2), or (3), shown below:

[Chem. 3]

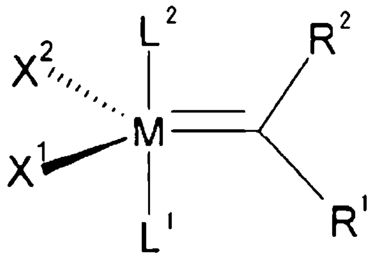

· · · (1)

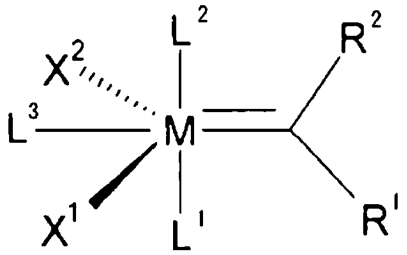

· · · (2)

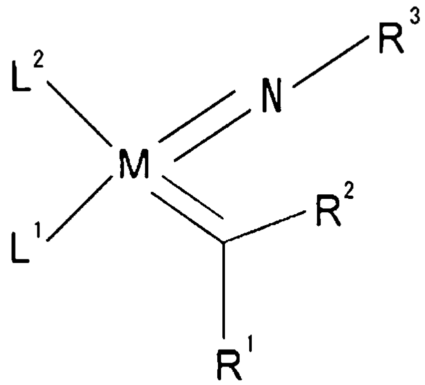

· · · (3)

where, in general formulae (1), (2), and (3), M is ruthenium, titanium, molybdenum, or tungsten,
$X^1$ and $X^2$ each independently represent a ligand,
$L^1$, $L^2$, and $L^3$ each independently represent a ligand,
$R^1$, $R^2$, and $R^3$ each independently represent hydrogen, an alkyl group, a cycloalkyl group, an alkenyl group, an alkynyl group, an aryl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, where these groups may be substituted with one or more alkyl groups, halogens, alkoxy groups, aryl groups, or heteroaryl groups,
$L^1$ and $L^2$ may be bonded to each other to form a ring,
$R^1$ and $R^2$ may be bonded to each other to form a ring, and
$L^1$ and $R^1$ may be bonded to each other to form a ring; and
a second decomposition step of heating a decomposition product obtained in the first decomposition step under

an inert gas atmosphere and in the absence of a catalyst, at a heating rate of 2000°C/min or more from 100°C to 450°C, and performing thermal decomposition at 450°C to 950°C.

**4.** A method for decomposing crosslinked rubber, comprising:

a first decomposition step of decomposing crosslinked rubber containing diene rubber using a catalyst represented by general formula (1), (2), or (3), shown below:

[Chem. 4]

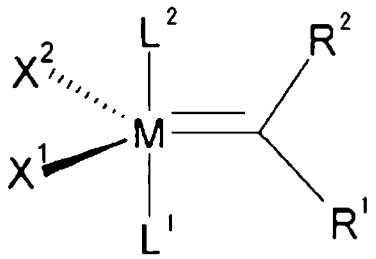

··· (1)

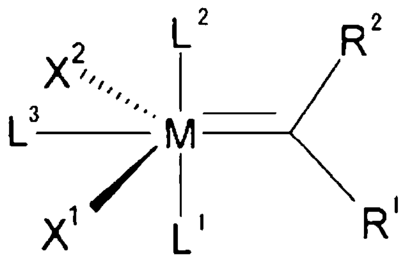

··· (2)

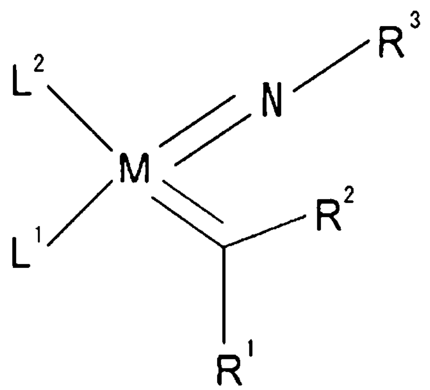

··· (3)

where, in general formulae (1), (2), and (3), M is ruthenium, titanium, molybdenum, or tungsten,
$X^1$ and $X^2$ each independently represent a ligand,

$L^1$, $L^2$, and $L^3$ each independently represent a ligand,
$R^1$, $R^2$, and $R^3$ each independently represent hydrogen, an alkyl group, a cycloalkyl group, an alkenyl group, an alkynyl group, an aryl group, a carboxylate group, an alkoxy group, an alkenyloxy group, an alkynyloxy group, an aryloxy group, an alkoxycarbonyl group, an alkylamino group, an alkylthio group, an arylthio group, an alkylsulfonyl group, or an alkylsulfinyl group, where these groups may be substituted with one or more alkyl groups, halogens, alkoxy groups, aryl groups, or heteroaryl groups,
$L^1$ and $L^2$ may be bonded to each other to form a ring,
$R^1$ and $R^2$ may be bonded to each other to form a ring, and
$L^1$ and $R^1$ may be bonded to each other to form a ring; and
a second decomposition step of heating a decomposition product obtained in the first decomposition step under an inert gas atmosphere and in the absence of a catalyst, at a heating rate of 2000°C/min or more from 100°C to 600°C, and performing thermal decomposition at 600°C to 950°C.

**5.** The method for decomposing crosslinked rubber according to any one of claims 1 to 4, wherein the thermal decomposition in the second decomposition step is performed at 650°C to 850°C.

**6.** The method for decomposing crosslinked rubber according to any one of claims 1 to 4, wherein, through the first decomposition step, 80 mass% or more of the diene rubber in the crosslinked rubber is decomposed into a diene oligomer having a weight-average molecular weight of 100 to 50,000.

**7.** The method for decomposing crosslinked rubber according to claim 6, wherein, through the second decomposition step, 30 mass% or more of the diene oligomer is decomposed into C4-C10 chemicals.

**8.** The method for decomposing crosslinked rubber according to any one of claims 1 to 4, wherein, through the first decomposition step and the second decomposition step, 20 mass% or more of the diene rubber in the crosslinked rubber is decomposed into C4-C10 chemicals.

**9.** The method for decomposing crosslinked rubber according to any one of claims 1 to 4, wherein the first decomposition step is performed at not lower than 20°C and not higher than 200°C.

**10.** The method for decomposing crosslinked rubber according to any one of claims 1 to 4, wherein the diene rubber includes at least one selected from the group consisting of isoprene skeleton rubber, styrene-butadiene rubber, and butadiene rubber.

**11.** The method for decomposing crosslinked rubber according to any one of claims 1 to 4, wherein the crosslinked rubber further contains carbon black.

**12.** The method for decomposing crosslinked rubber according to any one of claims 1 to 4, wherein the crosslinked rubber further contains sulfur.

**INTERNATIONAL SEARCH REPORT**

International application No.
**PCT/JP2024/027585**

**A. CLASSIFICATION OF SUBJECT MATTER**

***C08J 11/10***(2006.01)i
FI: C08J11/10 ZAB

According to International Patent Classification (IPC) or to both national classification and IPC

**B. FIELDS SEARCHED**

Minimum documentation searched (classification system followed by classification symbols)

C08J11/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-527426 A (EXXONMOBIL CHEMICAL PATENTS INC.) 28 June 2023 (2023-06-28) | 1-12 |
| A | WO 2022/101562 A1 (COMPAGNIE GENERALE DES ETABLISSEMENTS MICHELIN) 19 May 2022 (2022-05-19) | 1-12 |
| A | WO 2022/056367 A1 (THE UNIVERSITY OF AKRON) 17 March 2022 (2022-03-17) | 1-12 |
| A | US 2021/0371575 A1 (NATIONAL TECHNOLOGY & ENGINEERING SOLUTIONS OF SANDIA, LLC) 02 December 2021 (2021-12-02) | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/027585**

| Patent document cited in search report | Publication date (day/month/year) | Patent family member(s) | Publication date (day/month/year) |
|---|---|---|---|
| JP 2023-527426 A | 28 June 2023 | US 2023/0220179 A1<br>WO 2021/242636 A1<br>EP 4157813 A1<br>CN 115996901 A | |
| WO 2022/101562 A1 | 19 May 2022 | US 2024/0018332 A1<br>EP 4244076 A1<br>CN 116419943 A | |
| WO 2022/056367 A1 | 17 March 2022 | US 2023/0365743 A1 | |
| US 2021/0371575 A1 | 02 December 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009247241 A


### Non-patent literature cited in the description


- **HOEKSTRA et al.** *Chem. Eng. J.*, 2012, vol. 191, 45